# EUROPÄISCHE PATENTSCHRIFT

(11) **EP 1 960 640 B1**
(45) Veröffentlichungstag und Bekanntmachung des Hinweises auf die Patenterteilung: **25.09.2019**
(21) Anmeldenummer: 06818689.9
(22) Anmeldetag: 21.11.2006
(51) Int. Cl.: F01N 3/08, F01N 3/10, F02D 41/02, F02D 21/10, F01N 3/18

(54) **VERFAHREN ZUR REDUZIERUNG DER NOX-EMISSION VON DIESELMOTOREN**
METHOD OF REDUCING THE NOX EMISSIONS OF DIESEL ENGINES
PROCEDE DE REDUCTION DES EMISSIONS DE NOx DE MOTEURS DIESEL

(30) Priorität: 13.12.2005 DE 102005059451
(43) Veröffentlichungstag der Anmeldung: 27.08.2008
(73) Patentinhaber: Volkswagen Aktiengesellschaft, 38440 Wolfsburg (DE)
(72) Erfinder: GROENENDIJK, Axel, 38518 Gifhorn (DE); SCHER, Uwe, 38162 Cremlingen/Destedt (DE); ABERLE, Werner, 38542 Leiferde (DE); MÜLLER, Jörn, 38173 Sickte (DE)
(74) Vertreter: Pohlmann, Bernd Michael
(86) Internationale Anmeldenummer: PCT/EP2006/011125
(87) Internationale Veröffentlichungsnummer: WO 2007/068328

(56) Entgegenhaltungen:
- EP-A2- 0 990 788
- EP-A2- 1 350 932
- WO-A-00/21647
- JP-A- 1 083 809
- JP-A- 6 123 218
- JP-A- 2004 285 832
- JP-A- 2005 163 724
- US-B1- 6 679 051

## Beschreibung

Die Erfindung betrifft ein Verfahren zur Reduzierung der NOₓ-Emission von Dieselmotoren, insbesondere im volllastnahen Bereich bzw. bei Beschleunigungsphasen.

Nach der Einführung des Partikelfilters für weitgehend alle Niedrigstemissionskonzepte mit Dieselmotor ist weiterhin eine deutliche Reduzierung der NOₓ-Emissionen zur Erfüllung aller zukünftigen Emissionsgrenzwerte und Testzyklen notwendig. Eine besondere Herausforderung stellt dabei der US-SFTP-Test und hier speziell der US06-Cycle mit hochdynamischen Volllastbeschleunigungen und allgemein hohem Lastkollektiv dar. Einspritzseitige Maßnahmen bieten hier nur ein stark begrenztes Reduktionspotential. Gleichzeitig wird der Dieselmotor hier aufgrund der erforderlichen Leistungsdichte bei nahestöchiometrischem Gemisch λ ≈ 1,1-1,4 betrieben. Dieser Wert wird derzeit weitgehend durch die Russgrenze, aber auch durch den zulässigen Zylinderspitzendruck und die maximale Abgastemperatur vor der Turbine bestimmt.

Für moderne Magermixmotoren gilt, dass sie in einem Sauerstoffüberschuss zur Erhöhung des Motorwirkungsgrades arbeiten. Die Oxidation von CO und HC ist im Sauerstoffüberschuß (λ > 1) analog zum herkömmlichen Dreiwegekatalysator möglich, jedoch müssen Stickoxide (NOₓ) zwischengespeichert werden. Deren katalytische Reduktion gelingt nur in einem neutralen bis fetten Abgasgemisch. Ist die Aufnahmekapazität des Katalysators erschöpft, so wird seitens der Motorelektronik kurzfristig ein fettes, reduzierendes Abgasgemisch eingestellt. Innerhalb dieses kurzen, fetten Zyklusses werden die im Katalysator zwischengespeicherten Stickoxide zu Stickstoff reduziert und damit der Katalysator für den nächsten Speicherzyklus vorbereitet.

Für Ottomotoren hat sich hinsichtlich der Reduzierung der NOₓ-Emissionen der Drei-Wege-Katalysator (G-Kat) etabliert. Die Umwandlungsrate der Abgase liegt durch den Drei-Wege-Katalysator bei über 90%.

Der Drei-Wege-Katalysator weist vier Komponenten auf. Dazu zählt der Träger, der aus Monolithen (AlMg-Silikat = Keramik) oder Metallträgern aufgebaut ist. Wesentlich ist eine möglichst große Oberfläche, um große Abgasmengen verarbeiten zu können. Der Träger ist mit mehreren tausend Kanälen durchzogen, durch die das Abgas strömt. Um den Strömungswiderstand möglichst klein zu halten, ist der Monolith sehr dünnwandig (ca. 0,3 mm). Da bei Metallträgern die Gefahr des Durchbrennens oder einer mechanischen Beschädigung geringer ist, kann die Wandstärke viel dünner ausgelegt werden (ca. 0,05 mm).

Zur weiteren Vergrößerung der Oberfläche ist der Keramikträger mit einer Zwischenschicht (Wash Coat oder Trägerschicht) aus Aluminiumoxid (Al₂O₃) versehen. Dadurch vergrößert sich die Oberfläche um das 7000fache. Zudem wird die Sauerstoffspeicherfähigkeit erhöht.

Auf die Zwischenschicht wird die aus den Edelmetallen Platin und Rhodium und auch Palladium bestehende katalytisch aktive Schicht aufgedampft. Das Platin begünstigt die Oxidationsvorgänge, das Rhodium die Reduktionsvorgänge, Dabei reagieren die Metalle nicht selbst, sondern katalysieren die Reaktion lediglich. Das Verhältnis von Platin zu Rhodium beträgt etwa 5:1. Die Gesamtmenge der beiden Edelmetalle liegt pro Katalysator zwischen 4 und 9 Gramm.

Da der keramische Träger sehr spröde ist und auch eine andere Wärmedehnung als das Gehäuse aufweist, wird er in eine Dämpfungsschicht, ein Drahtgestrick oder eine Keramikfasermatte eingebettet. Metallträger benötigen diese Dämpfungsschicht nicht.

Die Funktion des Drei-Wege-Katalysators besteht darin Kohlenmonoxid CO durch Oxidation zu CO₂, Kohlenwasserstoffe HC durch Oxidation zu Wasser H₂O und Kohlendioxid CO₂ und Stickoxide NOₓ durch Reduktion zu Stickstoff N₂ umzusetzen.

Im Katalysator laufen somit sowohl Oxidations- als auch Reduktionsvorgänge ab, für die Sauerstoff als Oxidationsmittel bzw. CO als Reduktionsmittel benötigt werden. Um eine möglichst hohe Konvertierungsrate zu erzielen, müssen die Schadstoffe CO, HC und NOₓ und die Reaktionspartner O₂ und CO in einem bestimmten Verhältnis vorhanden sein. Das bedeutet, dass bei magerer Gemischzusammensetzung eine hohe Umwandlungsrate für CO und HC erreicht wird, da im Abgas eine hohe Restsauerstoffkonzentration vorliegt. Diese führt jedoch dazu, dass bei zu geringen CO- bzw. HC-Konzentrationen im Abgas die Umwandlungsrate von NOx sinkt. Umgekehrt ist die Konvertierungsrate von NOx bei einem fetten Gemisch hoch, da genügend CO zur Reduktion im Abgas vorhanden ist. Dafür sinkt in diesem Fall die Umwandlung von CO und HC, da nur ein geringer Sauerstoffanteil im Abgas vorliegt.

Die G-Kat-Technologie war bisher für Dieselmotoren uninteressant, da diese bei Luftüberschuss betrieben werden. Dieselmotoren sind daher mit einem Oxidationskatalysator ausgerüstet, der etwa 80% der nicht oder nur teilweise verbrannten Kohlenwasserstoffe (HC) in Wasserdampf (H2O) und Kohlendioxid (CO2) umwandelt und Kohlenmonoxid (CO) zu Kohlendioxid (CO2) oxidiert. Für die zu reduzierenden Stickoxide (NOx) bietet der Oxidationskatalysator aufgrund des Sauerstoffüberschusses keine Umsetzungsmöglichkeit. Hierfür ist eine Abgasrückführung erforderlich, die durch Abkühlung des Brennraumes die Entstehung der Stickoxide verringert.

Aus dem Dokument EP 0 990 788 A2 ist ein Abgasreinigungssystem für einen Motor beziehungsweise ein Abgasreinigungssystem bekannt, welches mit einem Kraftstoffeinspritz-Regel- bzw. -Steuermerkmal ausgerüstet ist, welches geeignet an einem Zylindereinspritzungs-Fremd- bzw. Funkenzündungstyp eines Dieselmotors installiert ist. Es ist vorgesehen, dass die Kraftstoffmenge zwischen dem Beginn eines Ansaug- bzw. Einlasshubes und einem Ende einer ersten Hälfte eines Verdichtungs- bzw. Kompressionshubes nachfolgend auf den Einlasshub eingespritzt wird, während sich Abgas auf dem geringen Niveau einer Sauerstoffkonzentration befindet.

Aus dem Dokument EP 1 350 932 A2 ist bereits ein Verfahren zur Reduzierung der NOx-Emissionen von Dieselmotoren bekannt, bei dem zur Erhöhung der Temperaturen des Abgases der Dieselmotor in einer Warmlaufphase in einem im Betriebsbereich mit einem Lambdawert von annähernd = 1 betrieben wird, wobei zur Reinigung des Abgases ein Drei-Wege-Katalysator eingesetzt wird.

Der vorliegenden Erfindung liegt die Aufgabe zugrunde, ein Verfahren zur Reduzierung der NOx-Emissionen von Dieselmotoren zu schaffen, das sowohl bei stationären Starklastphasen als auch bei Instationärphasen eine nahezu vollständige NOx-Konvertierung bei gleichzeitig geringen Russemissionen ermöglicht.

Diese Aufgabe wird durch die Merkmale des unabhängigen Patentanspruchs gelöst. Vorteilhafte Aus- und Weiterbildungen, welche einzeln oder in Kombination miteinander eingesetzt werden können, sind der Gegenstand der abhängigen Ansprüche.

Die Erfindung zur Reduzierung der NOx-Emissionen von Dieselmotoren, wobei durch eine Kombination aus innermotorischen Maßnahmen, wobei durch Regeln des Luftverhältnisses auf einen engbegrenzten Bereich von λ ≤ 1 mit höheren Russemissionen und Abfangen der höheren Russemmissionen durch einen dem Dref-Wege-Katalysator nachgeschalteten Rußpartikelfilter in Instationärphasen erfolgt, zeichnet sich aus durch einen Übergang bei hohen Lasten zu einer teilhomogenen Dieselverbrennung mit λ = 1 zu einem rußarmen Betrieb in stationären Phasen.

Vorteilhaft wird als innermotorische Maßnahme das Luftverhältnis auf λ = 1 durch Erhöhung der Abgasrückführung, Erhöhung der eingespritzten Kraftstoffmasse, Reduzierung des Ladedrucks, eine externe Einspritzung von Kraftstoff in den Abgasstrang oder eine Einbringung von Sekundärluft durch einen externen Luftpfad in den Abgasstrang eingestellt.

Es ist vorteilhaft, dass der Drei-Wege-Katalysator positionsvariabel eingesetzt werden kann und nicht an einem speziellen Ort im Abgastrakt verbaut werden muss. So ist es möglich, ihn für alle bisher bekannten Modelle zur Abgasnachbehandlung von Dieselmotoren einzusetzen.

So besteht beispielsweise die Möglichkeit, den Drei-Wege-Katalysator in den Oxidationskatalysator zu integrieren, wo er zusätzlich zum Oxidationskatalysator die Oxidationsreaktionen von HC und CO begünstigt und seine Drei-Wege-Funktion besonders effizient ausgenutzt werden kann.

Alternativ kann der Drei-Wege-Katalysator auch in einen NOx-Speicher eingebunden werden.

Ferner ist es möglich, den Drei-Wege-Katalysator einem Russpartikelfilter nachzuschalten.

Hinsichtlich der innermotorischen Maßnahmen besteht die Möglichkeit, das Luftverhältnis auf λ = 1 durch Erhöhung der Abgasrückführung abzusenken, beispielsweise durch einen Niederdruck-Abgasrückführungspfad. Bei dieser Verfahrensvariante wird dann der Ladedruck bzw. die Kraftstoffmasse konstant gehalten.

Wahlweise kann das Luftverhältnis auf λ = 1 auch durch Reduzierung des Ladedrucks abgesenkt werden. Hierbei bleibt dann die eingespritzte Kraftstoffmasse konstant.

Zudem ist es möglich, das Luftverhältnis auf λ = 1 durch Erhöhung der eingespritzten Kraftstoffmasse abzusenken bzw. einzustellen.

Ferner ist es möglich, das Luftverhältnis auf λ = 1 durch eine externe Einspritzung von Kraftstoff in den Abgasstrang, vorzugsweise vor dem Drei-Wege-Katalysator, einzustellen. Weiterhin kann das Luftverhältnis auf λ = 1 durch die Einbringung von Sekundärluft in den Abgasstrang mittels eines zusätzlichen Luftpfads eingestellt werden.

Voraussetzung für eine optimale NOₓ-Reduzierung ist eine genaue Lambdaregelung auf einen eng begrenzten Bereich von λ ≤ 1. Die zu erwartenden höheren Russemissionen können in kurzzeitigen Instationärphasen durch den Partikelfilter abgefangen werden. Eine weitere Russabsenkung ist durch einspritzseitige Maßnahmen wie z. B. durch Einspritzdruckerhöhung oder durch Mehrfacheinspritzung möglich.

Für längere stationäre Phasen ist der russarme Dieselbetrieb durch einen Übergang zu einer teilhomogenen Dieselverbrennung auch bei hohen Lasten mit λ = 1 möglich. Hierbei steht nicht die damit üblicherweise verbundene innermotorische NOₓ-Reduzierung im Vordergrund, da diese aufgrund des bei Volllast herrschenden mittleren Temperaturniveaus T > 2000 K im Brennraum nicht möglich ist, sondern allein die Möglichkeit der russfreien Verbrennung, während die innermotorisch stark ansteigenden NOₓ-Emissionen über die Drei-Wege-Katalyse konvertiert werden.

Die vorliegende Erfindung schafft erstmals vorteilhaft ein Verfahren zur Reduzierung der NOx-Emissionen von Dieselmotoren, insbesondere im volllastnahen Bereich und bei Beschleunigungsphasen, das unter Verwendung einer Drei-Wege-Katalysators und durch innermotorische Maßnahmen eine nahezu vollständige NOₓ-Konvertierung ermöglicht.

## Patentansprüche

1. Verfahren zur Reduzierung der NOₓ-Emissionen von Dieselmotoren, wobei durch eine Kombination aus innermotorischen Maßnahmen und einer Verwendung eines Drei-Wege-Katalysators eine NOₓ-Konvertierung durchgeführt wird, wobei in stationären Phasen bei hohen Lasten ein Übergang zu einer teilhomogenen Dieselverbrennung mit λ = 1 mit einem rußarmen Betrieb erfolgt, wobei in kurzzeitigen Instationärphasen ein Regeln des Luftverhälnisses auf einen engbegrenzten Bereich von λ ≦ 1 mit höheren Russemissionen erfolgt, **gekennzeichnet durch** ein Abfangen der höheren Russemmissionen durch einen dem Drei-Wege-Katalysator nachgeschalteten Rußpartikelfilter.

2. Verfahren nach Anspruch 1, **dadurch gekennzeichnet, dass** als innermotorische Maßnahme das Luftverhältnis auf λ = 1 durch Erhöhung der Abgasrückführung, Erhöhung der eingespritzten Kraftstoffmasse, Reduzierung des Ladedrucks, eine externe Einspritzung von Kraftstoff in den Abgasstrang oder eine Einbringung von Sekundärluft durch einen externen Luftpfad in den Abgasstrang eingestellt wird.

3. Verfahren nach Anspruch 1 oder 2, **dadurch gekennzeichnet, dass** der Drei-Wege-Katalysator in einen Oxidationskatalysator integriert ist.

4. Verfahren nach einem der vorhergehenden Ansprüche, **dadurch gekennzeichnet, dass** der Drei-Wege-Katalysator in einen NOₓ-Speicher eingebunden ist.

## Claims

1. Method for reducing the NOx emissions of diesel engines, wherein the combination of internal engine measures and the use of a three-way catalytic converter performs an NOx conversion, wherein in stationary phases at high loads, transition to a partially homogeneous diesel combustion at λ=1 is carried out with low-soot operation, wherein air-fuel ratio control is effected over a narrow range of λ ≦ 1 with higher soot emissions in short-term transient phases, **characterized in that** a soot particle filter downstream of the three-way catalytic converter traps the higher soot emissions.

2. Method according to claim 1, **characterized in that** the air-fuel ratio is set to λ=1 as an internal engine measure by increasing the exhaust gas recirculation, increasing the injected fuel mass, reducing the boost pressure, external injection of fuel into the exhaust system or introduction of secondary air through an external air path in the exhaust system.

3. Method according to claim 1 or 2, **characterized in that** the three-way catalytic converter is integrated in an oxidation catalytic converter.

4. Method according to any one of the preceding claims, **characterized in that** the three-way catalytic converter is incorporated in an NOx adsorber.

## Revendications

1. Procédé de réduction des émissions de NOₓ de moteurs diesel, dans lequel, grâce à une combinaison de mesures à l'intérieur du moteur et d'une utilisation d'un catalyseur trois voies, on met en oeuvre une conversion des NOₓ, une transition ayant lieu, au cours des phases stationnaires et sous charge élevée, conduisant à une combustion diesel partiellement homogène avec λ = 1 et un fonctionnement à faible teneur en suie, et dans lequel, dans les phases transitoires de courte durée, il se produit une régulation du rapport d'air sur une plage étroitement délimitée de λ ≦ 1, avec des émissions de suie plus élevées, **caractérisé en ce que** les émissions plus élevées de suie sont captées par un filtre à particules de suie monté en aval du catalyseur trois voies.

2. Procédé selon la revendication 1, **caractérisé en ce que**, en tant que mesure à l'intérieur du moteur, on ajuste le rapport d'air à λ = 1 par une augmentation de la réaspiration des gaz d'échappement, une augmentation de la masse de carburant injectée, une réduction de la pression de suralimentation, une injection externe de carburant dans la conduite de gaz d'échappement ou une introduction d'air secondaire grâce à un trajet d'air externe dans la conduite de gaz d'échappement.

3. Procédé selon la revendication 1 ou 2, **caractérisé en ce que** le catalyseur trois voies est intégré dans un catalyseur d'oxydation.

4. Procédé selon l'une des revendications précédentes, **caractérisé en ce que** le catalyseur trois voies est incorporé dans un accumulateur de NOₓ.
